# EUROPÄISCHE PATENTSCHRIFT

(11) **EP 2 510 207 B1**
(45) Veröffentlichungstag und Bekanntmachung des Hinweises auf die Patenterteilung: **23.12.2015**
(21) Anmeldenummer: 10772979.0
(22) Anmeldetag: 19.10.2010
(51) Int. Cl.: F02C 6/12, F01D 17/16

(54) **Verstelleinrichtung für eine Aufladeeinrichtung, insbesondere für einen Abgasturbolader**
Adjusting device for a charging device, in particular for an exhaust gas turbocharger
Dispositif d'ajustage pour un dispositif de suralimentation, en particulier pour un turbocompresseur à gaz d'échappement

(30) Priorität: 09.12.2009 DE 102009057664
(43) Veröffentlichungstag der Anmeldung: 17.10.2012
(73) Patentinhaber: IHI Charging Systems International GmbH, 69126 Heidelberg (DE)
(72) Erfinder: KIERAT, Jaroslaw, 67227 Frankenthal (DE)
(74) Vertreter: Heeb-Keller, Marion Annette
(86) Internationale Anmeldenummer: PCT/EP2010/006384
(87) Internationale Veröffentlichungsnummer: WO 2011/069574

(56) Entgegenhaltungen:
- WO-A1-2007/093407
- WO-A1-2007/134787

## Beschreibung

Die Erfindung betrifft eine Verstelleinrichtung für eine Aufladeeinrichtung, insbesondere für einen Abgasturbolader, der im Oberbegriff des Patentanspruchs 1 angegebenen Art.

Die WO 2007/093407 A1 offenbart einen Turbolader mit variabler Turbinengeometrien mit einem Turbinengehäuse mit einem Zuführkanal für Abgase, mit einem Turbinenrotor, der drehbar im Turbinengehäuse gelagert ist und mit einem Leitgitter, das den Turbinenrotor radial außen umgibt, das ein Schaufellagerring aufweist, das eine Mehrzahl von Leitschaufeln, die jeweils eine im Schaufellagerring gelagerte Schaufelwelle aufweisen, und das einen Verstellring aufweist, der mit den Leitschaufeln über zugeordnete, an den Schaufelwellen an einem ihrer Enden befestigte Schaufelhebel in Wirkverbindung steht, wobei jeder Schaufelhebel am anderen Ende einen Hebelkopf aufweist, der mit einer zugeordneten Eingriffsausnehmung des Verstellrings in Eingriff bringbar ist. Jeder Schaufelhebel ist dabei asymmetrisch aufgebaut und weist nur auf einer Seite eines Mittelabschnitts eine bogensegmentförmige Lagernase auf, die in der gleichen Ebene wie der Hebelkopf angeordnet ist.

Aus der WO 2007/134787 A1 geht eine Verstellvorrichtung für einen Abgasturbolader hervor, mit einem Haltering, an dem eine Mehrzahl von Leitschaufeln gehalten ist. Des Weiteren ist ein Verstellring vorgesehen, mit dessen Hilfe eine Bewegung der Leitschaufeln initiierbar ist. Dabei steht der Verstellring über den jeweiligen Leitschaufeln zugeordnete Schaufelhebel in Wirkverbindung, wobei der Schaufelhebel mit dem Verstellring über eine senkrecht zur axialen Richtung der Verstelleinrichtung verlaufenden Wirkfläche in Wirkverbindung gebracht wird.

Der Turbolader weist unerwünscht hohe Spaltverluste auf, was einem effizienten Betrieb des Turboladers negativ beeinflusst.

Es ist daher Aufgabe der vorliegenden Erfindung, eine Verstelleinrichtung für eine Aufladeeinrichtung bereitzustellen, welche einen effizienteren Betrieb der Aufladeeinrichtung durch Reduzierung von Spaltverlusten bei gleichzeitig geringerem Verschleiß und einer entsprechend geringeren Ausfallwahrscheinlichkeit ermöglicht.

Diese Aufgabe wird durch eine Verstelleinrichtung für eine Aufladeeinrichtung mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Eine erfindungsgemäße Verstelleinrichtung für eine Aufladeeinrichtung, insbesondere für einen Abgasturbolader, mit zumindest einem Halteelement, insbesondere einem Haltering, an welchem eine Mehrzahl von Leitschaufeln gehalten ist, welche über ein jeweiliges Verbindungselement mit einem Betätigungselement, insbesondere einem Verstellring, in Wirkverbindung bringbar und welche mittels des Betätigungselements in ihrem jeweiligen Anstellwinkel einstellbar sind, zeichnet sich dadurch aus, dass das jeweilige Verbindungselement mit dem Betätigungselement über zumindest eine schräg zur axialen Richtung der Verstelleinrichtung verlaufende Wirkfläche in Wirkverbindung bringbar ist.

Durch diese schräg zur axialen Richtung der Verstelleinrichtung verlaufende Wirkfläche, welche beispielsweise an dem Verbindungselement oder an dem Betätigungselement vorgesehen ist, wobei auch an dem Verbindungselement sowie an dem Betätigungselement jeweils eine Wirkfläche, die zumindest im Wesentlichen parallel zueinander verlaufen, vorgesehen sein können, ist eine definierte Positionierung des Verbindungselements, welches beispielsweise als Verbindungsplatte ausgebildet ist, in axialer Richtung des Laufrads und damit in paralleler Richtung zu einer Drehachse der Leitschaufeln ermöglicht, was Spaltverluste der Verstelleinrichtung damit der gesamten Aufladeeinrichtung deutlich reduziert. Dies ermöglicht einen sehr effizienten Betrieb der Aufladeeinrichtung, die somit einen verbesserten Wirkungsgrad aufweist.

Ebenso weist die erfindungsgemäße Verstelleinrichtung einen deutlich geringeren Verschleiß und damit eine geringe Ausfallwahrscheinlichkeit auf, da ein unkontrolliertes Bewegen des jeweiligen Verbindungselements und damit der jeweiligen Leitschaufel in axialer Richtung vermieden ist.

Gleichzeitig bietet die erfindungsgemäße Verstelleinrichtung die Möglichkeit die Leitschaufeln über das jeweilige Verbindungselement durch das Betätigungselement in ihrem jeweiligen Anstellwinkel zu verändern, um damit eine optimale Anpassung des Laufrads an Strömungsbedingungen zu realisieren. Dadurch ist ein sehr effizienter Betrieb der Aufladeeinrichtung in einem sehr großen Spektrum von Betriebspunkten, beispielsweise einer der Aufladeeinrichtung zugeordnete Verbrennungskraftmaschine, möglich, was einem geringen Kraftstoffverbrauch und damit geringen CO₂-Emissionen der Verbrennungskraftmaschine zugute kommt. Die Einstellung des Anstellwinkels erfolgt dabei beispielsweise durch eine Drehung um die Drehachse der jeweiligen Leitschaufel, wobei das Betätigungselement über die erfindungsgemäße Wirkfläche bzw. die erfindungsgemäßen Wirkflächen mit dem Verbindungselement zusammenwirkt, worüber schließlich die Leitschaufeln verdreht werden.

Dabei greift beispielsweise das Verbindungselement in eine Nut des Betätigungselements ein. Ebenso möglich ist die umgekehrte Ausbildung, wobei beispielsweise das Betätigungselement mit einem entsprechenden Teil in eine Nut des Verbindungselements eingreift.

In jeglicher Hinsicht ist durch die schräge Wirkfläche bzw. die schrägen Wirkflächen ein Schub der jeweiligen Leitschaufel in axialer Richtung darstellbar zur Erreichung der bereits genannten Vorteile.

Bei einer vorteilhaften Ausführungsform der Erfindung ist ein Laufrad vorgesehen, welches als Turbinenrad ausgebildet ist, wobei die jeweilige Leitschaufel mittels der schrägen Wirkfläche bzw. der schrägen Wirkflächen in Richtung eines Turbinenradaustritts bewegbar ist. Dabei hängt diese schräge Ausbildung der Wirkfläche ab von einer jeweiligen Bewegungsrichtung des Betätigungselements. Im Falle der Ausbildung des Betätigungselements als Verstellring ist dabei eine entsprechende schräge Ausbildung der Wirkfläche bzw. der Wirkflächen vorgesehen, sodass bei einer Drehung das jeweilige Verbindungselement und damit die jeweilige Leitschaufel in Richtung des Turbinenradaustritts bewegbar sind.

Bei einer Drehung des Verstellrings in die andere Richtung ist aber eine zu der ersten Ausbildung umgekehrte Ausbildung der Wirkfläche bzw. der Wirkflächen vonnöten. Betrachtet man beispielsweise die Wirkfläche bzw. die Wirkflächen in einem Längsschnitt der erfindungsgemäßen Verstelleinrichtung, so weist die Wirkfläche beispielsweise eine Keilform auf, die in axialer Richtung in die Richtung, in welche das Verbindungselement und damit die jeweilige Laufradschaufel bewegt bzw. gedrückt werden soll, also beispielsweise in Richtung des Turbinenaustritts, rampenförmig ansteigend ausgebildet ist.

Beispielsweise ist diese schräge Wirkfläche durch ein Metallpulver-Spritzgieß-Verfahren ausgebildet, durch welches auch das jeweilige Verbindungselement und/oder die jeweilige Radschaufel und/oder das Betätigungselement ausgebildet ist bzw. sind. Im Rahmen eines solchen Metallpulver-Spritzgieß-Verfahrens ist die erfindungsgemäße schräge Wirkfläche beispielsweise durch einen Härteprozess ausbildbar, während welchem Kontaktflächen, über welche also das Verbindungselement und das Betätigungselement zur Ausbildung der Wirkverbindung in Kontakt miteinander treten, gehärtet werden.

Der Effekt der erfindungsgemäßen, schrägen Wirkfläche ist, dass eine Betätigung des Betätigungselements eine Kraftkomponente in axialer Richtung der Verstelleinrichtung auf das Verbindungselement erzeugt, wodurch also das Verbindungselement und damit die Leitschaufel in die entsprechende axiale Richtung bewegbar sind. Eine Reaktionskraft von dem Verbindungselement auf das Betätigungselement resultiert aus einem Gasimpuls auf die Leitschaufel, welche sich über das Verbindungselement auf das Betätigungselement vorpflanzt.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombination oder in Alleinstellung verwendbar, ohne den Rahmen der Erfindung zu verlassen.

Die Zeichnungen zeigen in:
- Fig. 1: eine perspektivische Ansicht einer Ausführungsform eines Verbindungselement der erfindungsgemäßen Verstelleinrichtung;
- Fig. 2: eine Schnittansicht des Verbindungselement gemäß Fig. 1 sowie eines Betätigungselements der erfindungsgemäßen Verstelleinrichtung, mittels welchem das Verbindungselement und damit eine Leitschaufel der Verstelleinrichtung einstellbar sind;
- Fig. 3: eine perspektivische Teilschnittansicht einer Ausführungsform der erfindungsgemäßen Verstelleinrichtung; und
- Fig. 4: zwei perspektivische Ansichten der Verstelleinrichtung gemäß Fig. 3.

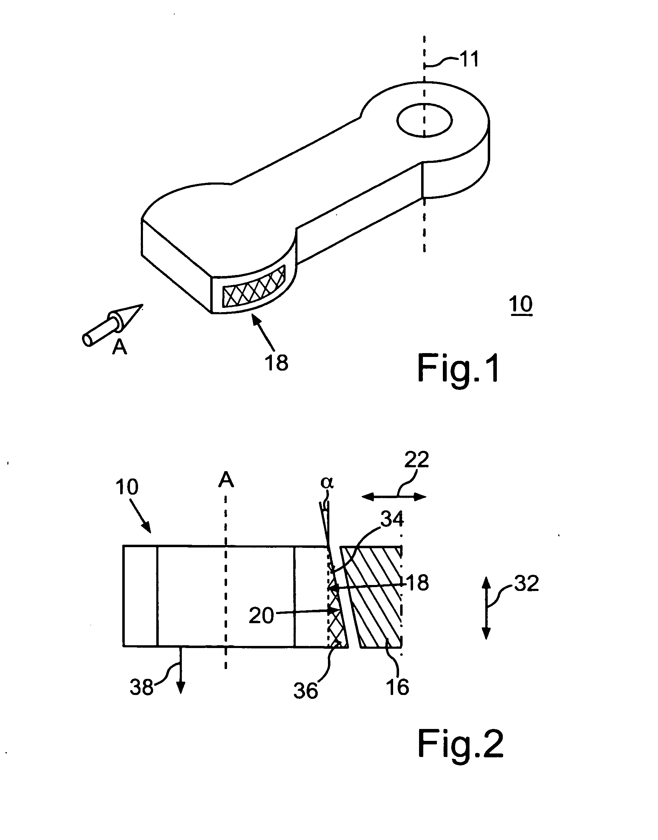

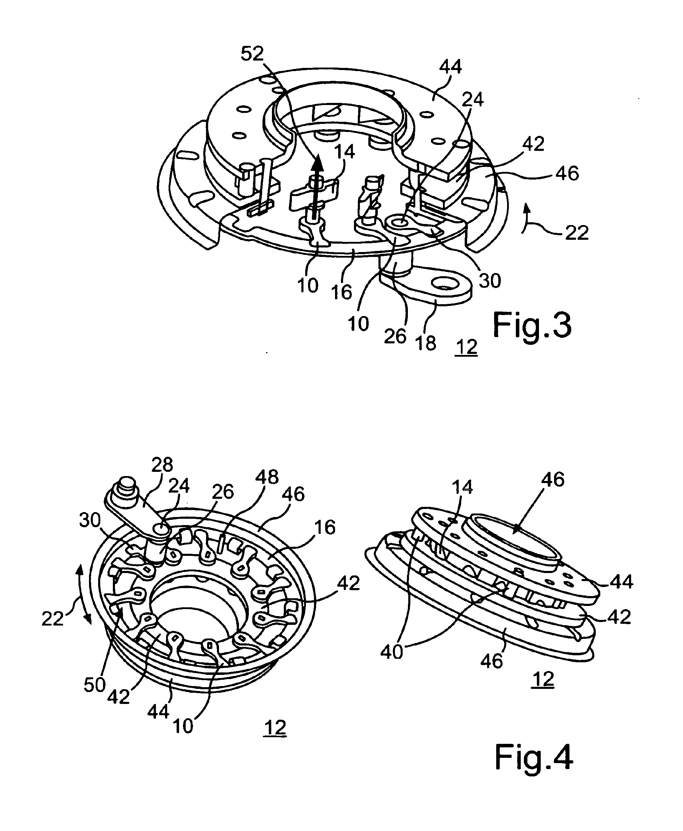

Die Fig. 1 zeigt ein Verbindungselement 10 einer Verstelleinrichtung 12 (Fig. 3 und 4) über welches eine jeweilige, an einem Haltering 42 (Fig. 3 und 4) gehaltene Leitschaufel 14 (Fig. 3) mittels eines Betätigungselements in Form eines Verstellrings 16 in ihrem Anstellwinkel einstellbar ist. Die Verstelleinrichtung 12 weist dabei eine Mehrzahl derartiger Leitschaufeln 14 sowie Verbindungselemente 10 auf, wobei in den Fig. 3 und 4 jeweils nur eine Leitschaufel 14 und ein Verbindungselement 10 der Übersicht wegen mit Bezugszeichen versehen sind.

Zur Einstellung des Anstellwinkels ist das Verbindungselement 10 mit dem Verstellring 16 über jeweilige Kontaktbereich 18 und 20 in Wirkverbindung bringbar, was durch Drehung des Verstellrings 16 gemäß einem Richtungspfeil 22 erfolgt. Die Drehung des Verstellrings 16 erfolgt dabei über eine Verstellwelle 24, die mittels einer Lagerungseinrichtung 26 in einem nicht dargestellten Gehäuse der Verstelleinrichtung 10 gelagert ist. Die Verstellwelle 24 wiederum wird von einer Verstellplatte 28 betätigt, die wiederum von einem nicht dargestellten Aktuator betätigbar ist. Die Drehung der Verstellwelle 24 wird dabei über einen Verstellhebel 30 auf den Verstellring 16 übertragen, wobei der Verstellhebel 30 in eine entsprechende Nut des Verstellrings 16 eingreift. Ebenso greifen die Verbindungselemente 10 in korrespondierende Nuten des Verstellrings 16 ein.

Insbesondere der Fig. 4 deutlich zu entnehmen ist, dass bei einer Drehung des Verstellrings 16 entsprechende Flanken der Verbindungselemente 10 mit korrespondierenden Flanken des Verstellrings 16 in Kontakt und damit in Wirkverbindung geraten, wodurch also die Kontaktbereiche 18 und 20 aneinander anliegen. Eine Drehung des Verstellrings 16 führ dabei zu einer Drehung bzw. zu einem Verschwenken des Verbindungselements 10 um eine Drehachse 11.

Wie der Fig. 2 zu entnehmen ist, sind die jeweiligen Verbindungselemente 10 und der Verstellring 16 über schräg zur axialen Richtung gemäß einem Richtungspfeil 32. der Verstelleinrichtung 12 verlaufende Wirkflächen 34 und 36 in Wirkverbindung bringbar, wodurch ein Schub des Verbindungselements 10 und damit der Leitschaufel 14 parallel zur axialen Richtung gemäß dem Richtungspfeil 32 in Richtung eines Turbinenradaustritts eines nicht dargestellten Turbinenrads gemäß einem Richtungspfeil 38 realisiert ist.

Dieser Schub erlaubt eine definierte Positionierung des Verbindungselements 10 und damit der Leitschaufel 14 in axialer Richtung und vermeidet somit eine unkontrollierte Bewegung dieser in diese Richtung, was einem sehr geringen Verschleiß der Verstelleinrichtung 12 zugute kommt. Ebenso vorteilhaft wirkt sich diese definierte, axiale Positionierung des Verbindungselements 10 und der Leitschaufel 14 auf Spaltverluste der Verstelleinrichtung aus, die also äußerst gering sind, was ein effizienten Betrieb einer Aufladeeinrichtung, beispielsweise eines Abgasturboladers, bei welcher die Verstelleinrichtung 12 einsetzbar ist, ermöglicht. Dies bedeutet also eine Wirkungsgradsteigerung der Aufladeeinrichtung, was sich auch positiv auf eine in Zusammenhang mit der Verstelleinrichtung 12 eingesetzte Verbrennungskraftmaschine auswirkt, wodurch deren Kraftstoffverbrauch und deren CO₂-Emissionen gering gehalten werden können.

Gemäß den Fig. 3 und 4 umfasst die Verstelleinrichtung 12 zudem Abstandshaltebolzen 40, mittels welchen der Haltering 42 von einem eine Düse 46 bildenden Ringelement 44 beabstandet ist. Zudem sind ein Stützring 46, ein Anschlagsstift 48 sowie ein dem Verstellring 16 zugeordneter Stützring 50 vorgesehen.

Ein Richtungspfeil 52 kennzeichnet dabei in Fig. 3 die Richtung, in welche die Verbindungselemente 10 und damit die Leitschaufeln 14 infolge der schrägen Ausbildung der Wirkflächen 34, 36 bewegbar bzw. drückbar sind.

Beispielhaft in der Fig. 2 dargestellt ist, dass die Wirkfläche 34 mit der axialen Richtung gemäß dem Richtungspfeil 32 einen Winkel α einschließt, wodurch die schräge Wirkfläche 34 dargestellt ist, und wobei die ebenfalls schräge Wirkfläche 36 zumindest im Wesentlichen parallel zur Wirkfläche 34 verläuft, wodurch die definierte Positionierung und das Halten in dieser definierten Position der Betätigungselemente 10 und damit der Leitschaufeln 14 realisiert ist. Die Verstelleinrichtung 12 ist beispielsweise auch bei anderweitigen Anwendungsfällen, so zum Beispiel in Zusammenhang mit einem Verdichter der Aufladeeinrichtung, analog einsetzbar.

## Patentansprüche

1. Verstelleinrichtung (12) für eine Aufladeeinrichtung, insbesondere einen Abgasturbolader, mit zumindest einem Halteelement (42), insbesondere einem Haltering (42), an welchem eine Mehrzahl von Leitschaufeln (14) gehalten ist, welche über ein jeweiliges Verbindungselement (10) mit einem Betätigungselement (16), insbesondere einem Verstellring (16), in Wirkverbindung bringbar und welche mittels des Betätigungselements (16) in ihrem jeweiligen Anstellwinkel einstellbar sind,
**dadurch gekennzeichnet, dass**
das jeweilige Verbindungselement (10) mit dem Betätigungselement (16) über zumindest eine schräg zur axialen Richtung der Verstelleinrichtung (12) verlaufende Wirkfläche (34, 36) in Wirkverbindung bringbar ist.

2. Verstelleinrichtung (12) nach Anspruch 1,
**dadurch gekennzeichnet, dass**
die schräge Wirkfläche (34, 36) an dem Verbindungselement (10) vorgesehen ist.

3. Verstelleinrichtung (12) nach einem der Ansprüche 1 oder 2,
**dadurch gekennzeichnet, dass**
die schräge Wirkfläche (34, 36) an dem Betätigungselement (16) vorgesehen ist.

4. Verstelleinrichtung (12) nach einem der vorhergehenden Ansprüche,
**dadurch gekennzeichnet, dass**
die Leitschaufeln (14) drehbar an dem Halteelement (42) gehalten sind.

5. Verstelleinrichtung (12) nach einem der vorhergehenden Ansprüche,
**dadurch gekennzeichnet, dass**
ein Laufrad vorgesehen ist, welches als Turbinenrad ausgebildet ist, wobei die jeweilige Leitschaufel (14) mittels der schrägen Wirkfläche (34, 36) in Richtung eines Turbinenradaustritts bewegbar ist.

6. Verstelleinrichtung (12) nach einem der vorhergehenden Ansprüche,
**dadurch gekennzeichnet, dass**
das jeweilige Verbindungselement (10) und/oder die jeweilige Leitschaufel (14) und/oder das Betätigungselement (16) durch ein Metallpulver-Spritzgieß-Verfahren ausgebildet ist bzw. sind.

## Claims

1. An actuating device (12) for a charging device, in particular for an exhaust gas turbocharger, comprising at least one holding element (42), in particular a holding ring (42) at which a plurality of guide vanes (14) are held which may be brought into an effective connection with an actuating element (16), in particular with an actuating ring (16), via a respective connecting element (10), and whose respective angles of incidence are adjustable by means of the actuating element (16),
**characterised in that**
the respective connecting element (10) may be brought into an effective connection with the actuating element (16) via at least one effective surface (34, 36) which extends at an angle to the axial direction of the actuating device (12).

2. The actuating device (12) according to Claim 1,
**characterised in that**
the inclined effective surface (34, 36) is provided at the connecting element (10).

3. The actuating device (12) according to one of Claims 1 or 2,
**characterised in that**
the inclined effective surface (34, 36) is provided at the actuating element (16).

4. The actuating device (12) according to one of the previous claims,
**characterised in that**
the guide vanes (14) are held rotatably at the holding element (42).

5. The actuating device (12) according to one of the previous claims,
**characterised in that**
a rotor is provided which is formed as a turbine wheel, wherein the respective guide vane (14) is movable by means of the inclined effective surface (34, 36) in the direction of a turbine wheel outlet.

6. The actuating device (12) according to one of the previous claims,
**characterised in that**
the respective connecting element (10) and/or the respective guide vane (14) and/or the respective actuating element (16) is or are, respectively, formed by a metal powder injection moulding method.

## Revendications

1. Dispositif de réglage (12) pour un dispositif de suralimentation, en particulier un turbocompresseur à gaz d'échappement, comprenant au moins un élément de maintien (42), en particulier un anneau de maintien (42), sur lequel une pluralité d'aubes directrices (14) est maintenue, lesquelles sont aptes à être amenées en liaison active, moyennant un élément de liaison (10) respectif, avec un élément d'actionnement (16), en particulier un anneau de réglage (16), et dont l'angle d'attaque respectif peut être réglé au moyen de l'élément d'actionnement (16),
**caractérisé en ce que**
l'élément de liaison (10) respectif est apte à être amené en liaison active avec l'élément d'actionnement (16) par au moins une surface active (34, 36) s'étendant obliquement par rapport à la direction axiale du dispositif de réglage (12).

2. Dispositif de réglage (12) selon la revendication 1,
**caractérisé en ce que**
la surface active oblique (34, 36) est prévue sur l'élément de liaison (10).

3. Dispositif de réglage (12) selon l'une des revendications 1 ou 2,
**caractérisé en ce que**
la surface active oblique (34, 36) est prévue sur l'élément d'actionnement (16).

4. Dispositif de réglage (12) selon l'une des revendications précédentes,
**caractérisé en ce que**
les aubes directrices (14) sont maintenues rotatives sur l'élément de maintien (42).

5. Dispositif de réglage (12) selon l'une des revendications précédentes,
**caractérisé en ce que**
une roue mobile est prévue, laquelle est réalisée sous la forme d'une roue de turbine, l'aube directrice (14) respective étant déplaçable dans la direction d'une sortie de la roue de turbine au moyen de la surface active oblique (34, 36).

6. Dispositif de réglage (12) selon l'une des revendications précédentes,
**caractérisé en ce que**
l'élément de liaison (10) respectif et/ou l'aube directrice (14) respective et/ou l'élément d'actionnement (16) est/sont réalisé(e)(s) par un procédé de moulage par injection de poudres métalliques.
